# FASCICULE DE BREVET EUROPEEN

(11) **EP 2 166 649 B1**
(45) Date de publication et mention de la délivrance du brevet: **05.09.2018**
(21) Numéro de dépôt: 08305567.3
(22) Date de dépôt: 18.09.2008
(51) Int. Cl.: H02K 11/00

(54) **Méthode et dispositif de suivi de la détérioration des isolants d'une machine tournante**
Methode und Vorrichtung zur Verfolgung der Abnutzung von Isolationsmaterialien einer umlaufenden Maschine
Method and device for monitoring the degradation of the insulators in a rotating machine

(43) Date de publication de la demande: 24.03.2010
(73) Titulaire: L'Air Liquide Société Anonyme pour l'Etude et l'Exploitation des Procédés Georges Claude, 75007 Paris (FR)
(72) Inventeur: Friedrich, M. Gérard, 77680 ROISSY EN BRIE (FR); Jaillet, Marie, 91400 ORSAY (FR); Mouren-Renouard, Emilie, 75006 PARIS (FR); Laurent, M. David, 92370 CHAVILLE (FR); Odic, Emmanuel, 77340 PONTAULT-COMBAULT (FR); Mineur, Bernard, 75116 PARIS (FR)
(74) Mandataire: Conan, Philippe Claude

(56) Documents cités:
- JP-A- 59 060 366
- SORITA T ET AL: "On-line detection of overheating material in turbine generators using chemical analysis" ELECTRICAL INSULATION AND DIELECTRIC PHENOMENA, 1999 ANNUAL REPORT CON FERENCE ON AUSTIN, TX, USA 17-20 OCT. 1999, PISCATAWAY, NJ, USA,IEEE, US, vol. 2, 17 octobre 1999 (1999-10-17), pages 533-536, XP010359378 ISBN: 978-0-7803-5414-2
- SORITA T ET AL: "A novel on-line method and equipment to detect local problems in turbine generators" ELECTRICAL INSULATION AND DIELECTRIC PHENOMENA, 2000 ANNUAL REPORT CON FERENCE ON OCT. 15-18, 2000, PISCATAWAY, NJ, USA,IEEE, vol. 2, 15 octobre 2000 (2000-10-15), pages 552-555, XP010522078 ISBN: 978-0-7803-6413-4

## Description

La présente invention concerne une méthode de maintenance préventive d'une machine tournante.

Les constructeurs et les utilisateurs de machines tournantes sont souvent confrontés à des problèmes de tenue dans le temps des isolants présents dans le stator et le rotor (lorsqu'ils sont bobinés) de ces équipements. Ceux-ci créent des conditions favorables à l'apparition de décharges électriques partielles dans ou au voisinage des isolants et celles-ci peuvent en retour contribuer à l'endommagement des isolants. Tout ceci peut provoquer à terme des pannes électriques conduisant à des arrêts d'exploitation, des pénalités ou des frais indirects, des coûts de rebobinage des stators et des rotors, ou même le remplacement partiel ou complet du matériel.

Aujourd'hui, il existe un certain nombre de solutions pour surveiller le phénomène de décharges partielles et/ou l'état des isolants. On peut citer notamment :
- la mesure électrique des décharges partielles par coupleur capacitif, qui est la plus courante. Elle se fonde sur la mesure des transitoires de courant dans les bobinages dus aux décharges partielles. En général, la méthode met en oeuvre des coupleurs installés dans les moteurs, qui viennent mesurer la fréquence et la charge correspondant à ces courants transitoires. Cette méthode permet d'évaluer le niveau de décharges partielles dans les stators des machines tournantes sans nécessiter l'arrêt de la machine. Les données obtenues par cette méthode nécessitent une interprétation et donc une bonne connaissance des phénomènes de décharges partielles. Elle ne donne qu'une évaluation du nombre et de l'amplitude des décharges partielles, mais aucune indication sur leur impact sur l'isolation.
- la mesure dite de résistance d'isolation : cette mesure est réalisée moteur arrêté. Elle consiste à appliquer une tension continue entre les enroulements conducteurs et la masse métallique du stator ou du rotor et à mesurer la résistance de l'isolation électrique entre ces deux éléments. Idéalement cette résistance est infinie mais en pratique elle ne l'est pas. Plus la résistance d'isolation est faible, plus il y a de chance d'avoir un problème d'isolation. Cette mesure ne peut être réalisée lorsque le moteur est en fonctionnement et s'avère très sensible à la température.

- la mesure de l'index de polarisation : il s'agit d'une variante de la mesure de la résistance d'isolation qui consiste à calculer le ratio entre la résistance d'isolation après avoir appliqué la tension à l'isolant pendant dix minutes et la résistance obtenue après une minute. Un indice de polarisation faible indique en général une pollution de l'isolant (huile, graisse...). Cette mesure est moins sensible à la température que la mesure de la résistance d'isolation.
- le test Hipot : il consiste à appliquer aux enroulements une forte tension continue. Si un défaut existe dans l'isolation, il entraînera, du fait de la tension appliquée, une rupture de l'isolation en ce point. Ce test ne peut-être réalisé que moteur arrêté et peut être destructif.
- la détection de certaines espèces gazeuses créées par l'ionisation de l'air, conséquence des décharges couronne ou de surface. Ces méthodes concernent notamment l'ozone et les NOx.
- la mesure de l'écart à la loi d'Ohm permet uniquement d'apprécier l'état de l'isolation à un instant donné et éventuellement de détecter des points faibles dans la partie du bobinage extérieure aux encoches. Cette mesure nécessite entre 1h30 et 2h30, une tension égale à deux fois la tension nominale et ne peut se faire qu'avec le moteur à l'arrêt.
   Pour juger de la qualité de l'isolation ces seuls critères ne suffisent pas. L'interprétation correcte des résultats exige la prise en compte d'autres données.
- la mesure de la tangente delta permet d'évaluer la régularité d'une qualité d'isolation en contrôle de fabrication et de mettre en évidence les problèmes de compacité de l'isolant. Pour les moteurs de fortes capacités, il faut des sources HT importantes, qui se prêtent mal à la mesure sur site. Cette mesure ne peut se faire qu'avec le moteur à l'arrêt. Le temps de mise en oeuvre est important et la température du bobinage lors de la mesure est un facteur important.
- le critère de Térase est une mesure de variation de capacité en fonction de l'application d'une tension HT (haute tension). Ce critère permet d'apprécier sur les anciens types d'isolation l'état diélectrique de l'isolation et le degré de vieillissement. Cette mesure nécessite une tension égale à deux fois la tension nominale nécessite que le moteur soit à l'arrêt et n'est valable que pour les anciens types d'isolation haute tension (Bitume ou Gomme Laque).

Toutes ces méthodes présentent un certain intérêt, cependant elles nécessitent soit l'arrêt systématique du moteur, soit une interprétation délicate du phénomène de décharges partielles en termes d'impact sur les isolants. Cette interprétation s'avère souvent hasardeuse, du fait que la caractérisation des décharges partielles n'est qu'indirectement liée à l'état des isolants.

On peut citer aussi d'autres méthodes permettant de caractériser des décharges partielles, mais qui ne paraissent pas adaptée au cas des machines tournantes :
- la mesure de l'onde thermique, utilisant les charges d'espace piégées dans l'isolant provenant de différents phénomènes (ionisation, polarisation...). La méthode consiste à appliquer une différence de température, qui induit un courant dépendant du champ électrique issu de ces charges d'espaces. Elle s'applique généralement aux câbles électriques isolés.
- la mesure acoustique, qui détecte les émissions ultrasonores produites lors des décharges. La méthode est adaptée en particulier pour les transformateurs.

Un but de la présente invention est de pallier tout ou partie des inconvénients de l'art antérieur relevés ci-dessus.

L'invention consiste d'abord en une méthode selon la revendication 1.

Selon l'invention, la machine tournante en question peut être aussi bien un appareil consommateur d'électricité produisant une énergie mécanique sous la forme d'un couple exercé par le rotor, qu'un appareil générant de l'énergie électrique à partir de l'énergie mécanique transmise à son rotor. Les appareils en question fonctionnent le plus souvent à une tension d'au moins 3kV. Le rotor et le stator sont en général recouverts d'un matériau isolant dont on veut suivre la détérioration.

La machine tournante est elle-même placée dans une enceinte protectrice, par exemple un carter. Cette enceinte présente en général quelques ouvertures pour laisser passer notamment des câbles électriques, des gaz... Elle est toutefois telle que les gaz présents autour du rotor et du stator ne se mélangent pas, ou peu, avec l'atmosphère extérieure à l'enceinte. L'atmosphère interne de la machine tournante est en général refroidie, soit par des trappes d'aération, ou par un système plus sophistiqué pouvant comporter des moyens de mise en mouvement de cette atmosphère et un échangeur de chaleur dans lequel circulent les gaz constituant cette atmosphère.

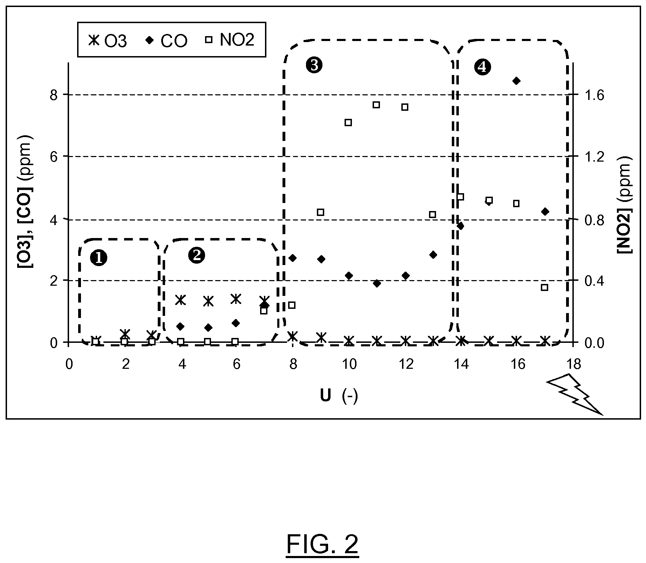

Les inventeurs ont remarqué que cette atmosphère présente une composition spécifique, comportant non seulement les espèces gazeuses issues de l'ionisation de l'air, mais aussi à certains moments du monoxyde de carbone en quantité détectable. Ils ont en outre établi que cette quantité de CO varie d'une manière qui peut être corrélée avec l'état de dégradation des isolants d'une manière plus pertinente qu'en utilisant les quantités des espèces issues de l'ionisation de l'air. En particulier, ils ont mis en évidence que la quantité de CO augmente de manière importante avant le claquage des isolants. Ceci sera décrit plus précisément ci-dessous en référence à la figure 2.

Pour réaliser l'étape (a) de mesure du CO, des capteurs de CO peuvent être disposés à des endroits quelconques dans ou au contact des gaz formant ou provenant de ladite atmosphère interne. Ils peuvent aussi être situés autour des gaz, si la mesure ne se fait pas par contact. Ils sont disposés en fonction de leur géométrie, de leur fonctionnement respectif (électro-chimique, radiatif...), de manière à obtenir, de préférence en continu, simultanément ou non, une ou des valeurs de concentration en CO en différents points ou zones et à ne pas entraver la bonne marche de la machine tournante.

A l'étape (b), on prépare l'utilisation éventuelle de ces résultats, en les visualisant, par exemple sur un écran à proximité de la machine tournante ou dans une salle de contrôle, ou en les signalant, par exemple par un ou des signaux sonores correspondant à des événements prédéfinis, et/ou encore en les enregistrant en vue d'un traitement à distance et/ou ultérieur.

Selon un mode de réalisation particulier, l'invention peut comprendre l'une ou l'autre des caractéristiques suivantes :
- lesdites mesures sont réalisées à l'aide d'un ou plusieurs capteurs placés soit :
   - à un endroit quelconque dans l'entrefer de ladite machine tournante ou sur son stator,
   - à un endroit quelconque de la paroi interne de ladite enceinte ou bien au niveau d'une trappe de ladite enceinte,
   - sur la paroi ou au sein de l'éventuel système de refroidissement de ladite machine tournante,
   - à un endroit quelconque d'un système de pompage extrayant une partie de l'atmosphère interne de ladite machine tournante.
On verra en effet dans la description ci-après, notamment de la figure 2, que la mesure du CO peut être avantageusement associée à celles du NO₂ et/ou de l'ozone. Celles-ci sont réalisées selon des modalités similaires à celles du CO. Les capteurs mesurant ces nouvelles espèces peuvent être de nouveaux capteurs, distincts de ceux mesurant le CO, ou bien les mêmes. On parle alors de capteurs « multi-espèces », capables de mesurer simultanément ou successivement la concentration en plusieurs des espèces gazeuses considérées.

Les endroits favorables à la mesure sont notamment dans l'entrefer de la machine, c'est à dire entre le rotor et le stator, soit au sein de cet entrefer ou bien directement sur le stator. Les capteurs peuvent aussi être placés sur la paroi interne de l'enceinte ou à proximité, dans l'éventuel système de refroidissement de la machine tournante ou dans une pompe dédiée qui aspire une partie des gaz formant l'atmosphère interne de la machine tournante. L'avantage de ces deux dernières possibilités est de fournir un mélange gazeux proche de la composition moyenne de l'atmosphère interne. La mesure n'est plus locale, mais concerne toute l'atmosphère interne. On pourra aussi utiliser avantageusement des capteurs qui réalisent eux-mêmes déjà une moyenne de concentrations, en faisant appel par exemple à des techniques optiques ou spectroscopiques. On peut alors obtenir une mesure représentative de la moyenne des concentrations sur un chemin optique passant par exemple dans l'entrefer.

Dans ce nouvel aspect de l'invention, on utilise la méthode de suivi définie précédemment comme première étape d'une méthode de maintenance préventive de la machine tournante. Les mesures précitées ayant été recueillies, elles sont, au cours d'une deuxième étape, analysées dans le temps, en vue de détecter un changement dans les concentrations des espèces gazeuses précitées et/ou dans leur vitesse d'évolution, et/ou toute combinaison de ces critères, ledit changement étant le signe d'une détérioration d'un isolant. Le critère déterminant est une augmentation de la concentration en CO concomitante avec une stagnation ou une diminution de la concentration en NO₂ et/ou de la concentration en O₃.

L'analyse peut présenter un caractère relatif en ce sens que les teneurs mesurées peuvent dépendre des spécificités de la machine tournante considérée, de l'endroit de la mesure, du degré de mélange des gaz ou encore de la technique de mesure. On peut s'affranchir de ce caractère relatif en introduisant une étape d'étalonnage avant l'analyse, de façon à adapter les critères d'analyse, en particulier les seuils de concentration ou de vitesse d'augmentation des concentrations. On peut aussi privilégier des critères d'analyse non relatifs, tels qu'une augmentation importante, par rapport aux valeurs passées, ou bien une augmentation forte en l'une des espèces et non corrélée à une augmentation dans une autre espèce.

D'autres données recueillies par d'autres méthodes peuvent venir compléter ce tableau.

Le résultat de l'analyse est d'arrêter ou non la machine tournante pour une inspection plus poussée, suivie éventuellement d'une opération de maintenance effective de la machine. On voit donc que la méthode permet de limiter le nombre d'arrêts inutiles de la machine tournante, et de prévenir des pannes pouvant aller jusqu'à la destruction du stator et du rotor.

En particulier, l'action de maintenance peut comprendre les étapes suivantes :
(iii-a) un arrêt de ladite machine tournante,
(iii-b) une inspection visuelle et/ou un ou plusieurs tests de l'état des isolants de cette machine (par exemple la mesure de la résistance d'isolation ou de l'indice de polarisation), et/ou
(iii-c) une intervention éventuelle sur la machine tournante.

Selon un mode particulier des méthodes précitées, ladite machine tournante est :
- soit un moteur électrique entraînant un compresseur de gaz industriel, en particulier l'air, l'oxygène, l'azote, l'argon, l'hydrogène, le monoxyde ou le dioxyde de carbone, le gaz de synthèse,
- soit un générateur d'électricité faisant partie d'une unité de cogénération d'électricité et d'un fluide chaud, par exemple de la vapeur, ou d'un cycle combiné,
- soit un moteur électrique entraînant une pompe, en particulier une pompe à eau.

Ce mode de réalisation concerne les principales machines tournantes utilisées dans le domaine des gaz industriels, les moteurs de compresseurs, les générateurs d'électricité et les pompes, en particulier à eau, pour lesquels il est important de minimiser les interruptions de fonctionnement. De nos jours, les arrêts pour maintenance programmée de ces machines sont de plus en plus espacés. Il devient de plus en plus utile de pouvoir détecter toute détérioration anormale des isolants de ces machines pendant les intervalles de temps grandissants entre les arrêts prévus.

D'autres particularités et avantages de l'invention apparaîtront à la lecture de la description ci-après, faite en référence aux figures, dans lesquelles :
- la figure 1 représente une machine tournante équipée d'un dispositif selon l'invention,
- la figure 2 représente un graphique illustrant le lien entre les concentrations en CO, NO₂ et O3 mesurées au voisinage d'un isolant soumis à une tension croissante.

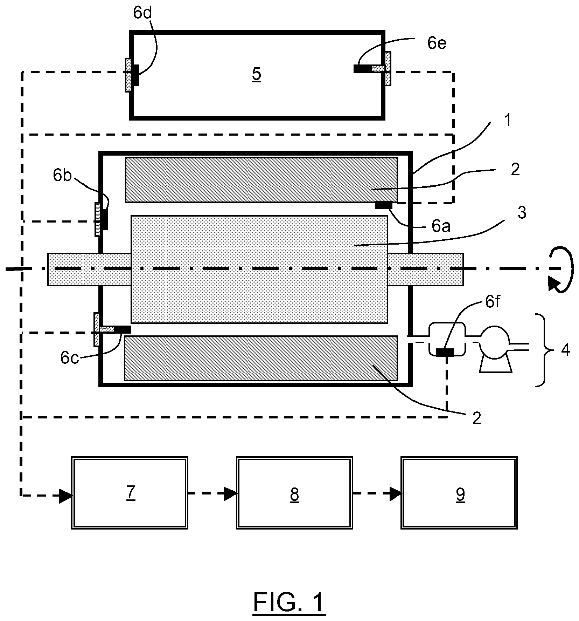

Sur la figure 1, on représenté schématiquement un dispositif mettant en oeuvre, de façon non limitative, la méthode de suivi selon l'invention, qui est aussi à la base d'une méthode de maintenance préventive.

La machine tournante se trouve dans une enceinte ou carter 1. Ladite enceinte définit une atmosphère interne dans laquelle se trouvent un stator 2 et un rotor 3. Entre ces deux éléments se trouve un espace appelé « entrefer ». La machine tournante est en outre pourvue :
- d'un système de refroidissement 5 de son atmosphère interne, qui fonctionne par échange de chaleur des gaz constituant ladite atmosphère interne avec une source froide (non représentée),
- d'une pompe 4 permettant d'aspirer une partie de ladite atmosphère interne.

Dans ou au contact des gaz formant cette atmosphère interne, on a disposé des capteurs 6 servant à mesurer la concentration en CO. Tous ces capteurs mesurent aussi la concentration en NO₂ et O₃. Ces capteurs sont à oxyde semi-conducteur. Cette technologie permet en particulier une miniaturisation des capteurs (environ 1 cm de diamètre et 1 cm de haut). De plus, elle fonctionne correctement à température élevée, jusqu'à plus de 80°C. D'autres types de capteurs pourraient être utilisés, par exemple reposant sur des techniques spectroscopiques, notamment pour obtenir une meilleure sélectivité chimique des capteurs. Dans la figure 1, chaque capteur présente trois résistances électriques liées chacune à la concentration en l'une desdites espèces gazeuses par une fonction mathématique simple. Dans cet exemple, ce sont donc des capteurs tri-espèces.

L'un des capteurs 6a se situe dans l'entrefer de ladite machine tournante sur le stator 2. Un capteur 6b se situe contre la paroi interne de l'enceinte 1 ; un capteur 6c se trouve à proximité de l'enceinte 1 et dans l'entrefer de ladite machine tournante ; un capteur 6d est contre la paroi interne du système de refroidissement 5 qui voit passer des gaz provenant de l'atmosphère interne de ladite machine tournante. Un capteur 6e est au sein dudit système de refroidissement 5, sur le passage des gaz provenant de ladite machine tournante. Un capteur 6f est dans ladite pompe 4 extrayant une partie des gaz formant l'amosphère interne de ladite machine tournante.

Ces capteurs sont reliés électriquement à des cartes électroniques 7 qui transforment les trois résistances de chaque capteur 6a à 6f en autant de signaux analogiques, par exemple des tensions, grâce à des ponts de résistances. Ces cartes 7 assurent aussi des fonctions classiques de filtrage et de stabilisation de ces signaux. Les signaux analogiques produits par les cartes 7 sont envoyés à un ou des modules d'acquisition 8 et d'enregistrement éventuel sous forme numérique. Ces données numériques sont ensuite matérialisées par le dispositif 9, par exemple sur un écran, et envoyées par SMS pour un traitement à distance.

La machine tournante représentée peut-être un moteur de compresseur de gaz industriel, par exemple de l'air, ou un générateur d'électricité, par exemple couplé à une turbine à gaz, ou encore un moteur de pompe à eau industrielle.

Les résultats visualisés ou envoyés sont ensuite éventuellement analysés selon la méthode de maintenance préventive décrite ci-dessus.

En référence à la figure 2, on va maintenant montrer la pertinence des mesures sur lesquelles se fonde l'invention.

Les inventeurs ont en effet réalisé de nombreuses expériences pour caractériser les espèces gazeuses qui apparaissent consécutivement aux décharges partielles au voisinage ou dans différents types d'isolants, ainsi que les types de capteurs les plus adaptés pour les détecter.

Le graphique de la figure 2 synthétise les résultats de l'une de ces expériences dans laquelle :
- on soumet un matériau, a priori isolant, ici un disque de résine époxy de 1 mm d'épaisseur, à des décharges électriques en géométrie pointe-plan sur barrière diélectrique,
- la tension servant à provoquer les décharges est augmentée graduellement, ce qui élève progressivement la puissance des décharges, jusqu'au claquage de l'isolant, c'est à dire une détérioration irréversible du matériau diélectrique, lui enlevant en pratique son pouvoir isolant,
- on recueille dans un flux d'air propre, à humidité contrôlé, les espèces gazeuses stables formées lors des décharges,
- on les mesure par différents moyens, d'une part les capteurs de concentrations en O₃, NO₂ et CO précités et d'autre part un spectrophotomètre d'absorption UV-visible ou infrarouge à transformée de Fourier, en guise de mesure témoin,
- tous ces capteurs sont placés dans ou en contact avec l'air humide en aval des décharges électriques.

Dans la figure 2, l'axe des abscisses représente la tension U à laquelle est soumis l'isolant à tester. Les valeurs sont sans dimension et vont jusqu'à la tension de claquage, symbolisé par un éclair à la valeur 18. L'axe des ordonnées à gauche représente les concentrations en O₃ et CO, tandis que l'axes des ordonnées à droite (ou axe secondaire) représente la concentration en NO₂. Les concentrations sont représentées en ppm (parties par million), c'est à dire en fraction volumique.

Dans ce système d'axes, les trois courbes représentent les concentrations en CO, NO₂ et O₃ en fonction de la puissance de la décharge appliquée à l'isolant, de zéro à la tension de claquage. On a divisé le graphique en quatre zones, matérialisées par des pavés en pointillés numérotés de 1 à 4.

Dans un premier temps, les concentrations de ces trois espèces gazeuses restent très faibles (zone 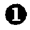 ). Puis, la puissance de décharge augmentant, de l'ozone apparaît, ainsi que du monoxyde de carbone en très faible quantité (zone 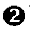 ). Lorsque la puissance des décharges a suffisamment augmenté, la concentration d'ozone chute, tandis qu'un pic de concentration en NO₂ se forme et que la concentration en monoxyde de carbone augmente (zone 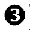 ). Peu avant le claquage, la concentration de NO₂ diminue à son tour et un pic de concentration en monoxyde de carbone apparaît (zone 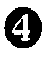 ).

Ainsi, en multipliant ce type d'expériences, les inventeurs ont pu démontrer que l'augmentation de la concentration en monoxyde de carbone permet d'anticiper de manière extrêmement pertinente le claquage des diélectriques, en particulier si cette augmentation ne s'accompagne pas d'une augmentation de la concentration en NO₂ et/ou O₃.

A la lumière de la description et des explications ci-dessus, on comprend que les principaux avantages de l'invention sont :
- de compléter les mesures électriques couramment utilisées et de fiabiliser le diagnostic de l'état des isolants,
- de disposer d'une méthode générale, s'appliquant à tous les types d'isolants et à tout type de machine tournante,
- de limiter le nombre d'arrêts pour inspection et le nombre de pannes des machines tournantes,
- de pouvoir s'appuyer sur des dispositifs de suivi peu onéreux, dans la mesure où les capteurs de CO, NO₂ et/ou O₃ sont relativement bon marché,
- de fournir des résultats de mesure qui s'interprètent facilement en termes de prédominance, d'apparition et disparition d'espèces gazeuses.

## Revendications

1. Méthode pour la maintenance préventive d'une machine tournante, comprenant au minimum un rotor (3) et un stator (2) placés dans une enceinte (1) définissant une atmosphère interne, et de manière optionnelle un système de refroidissement (5) de cette atmosphère comprenant les étapes suivantes :
(i) le suivi de la détérioration des isolants de ladite machine tournante par :
(a) la mesure de la ou des concentrations en CO (monoxyde de carbone) et également en NO₂ et/ou O₃ à un ou plusieurs endroits quelconques situés dans ou au contact des gaz formant l'atmosphère interne de ladite machine tournante, et
(b) la visualisation, la signalisation et/ou l'enregistrement des résultats de ladite mesure (7, 8, 9) ;
(ii) une analyse des résultats de mesure provenant dudit suivi, et la détection d'une augmentation importante de la concentration en CO si les concentrations en O₃ et/ou NO₂ n'augmentent pas simultanément, et
(iii) une action de maintenance décidée sur une base qui intègre au moins l'analyse réalisée à l'étape (ii).

2. Méthode telle que définie à la revendication 1, **caractérisée en ce que** lesdites mesures sont réalisées à l'aide d'un ou plusieurs capteurs (6) placés soit :
- à un endroit quelconque (6a, 6c) dans l'entrefer de ladite machine tournante ou sur son stator,
- à un endroit quelconque (6b) de la paroi interne de ladite enceinte (1) ou bien au niveau d'une trappe de ladite enceinte,
- sur la paroi (6d) ou au sein (6e) de l'éventuel système de refroidissement (5) de ladite machine tournante,
- à un endroit quelconque d'un système de pompage (4) extrayant une partie de l'atmosphère interne de ladite machine tournante.

3. Méthode telle que définie à la revendication 1 ou 2, **caractérisée en ce que** l'action de maintenance comprend les étapes suivantes :
(iii-a) un arrêt de ladite machine tournante,
(iii-b) une inspection visuelle et/ou un ou plusieurs tests de l'état des isolants de cette machine (par exemple la mesure de la résistance d'isolation ou de l'indice de polarisation), et/ou
(iii-c) une intervention éventuelle sur la machine tournante.

4. Méthode telle que définie à l'une quelconque des revendications 1 à 3, **caractérisée en ce que** ladite machine tournante est :
- soit un moteur électrique entraînant un compresseur de gaz industriel, en particulier l'air, l'oxygène, l'azote, l'argon, l'hydrogène, le monoxyde ou le dioxyde de carbone, le gaz de synthèse,
- soit un générateur d'électricité faisant partie d'une unité de cogénération d'électricité et d'un fluide chaud, par exemple de la vapeur, ou d'un cycle combiné,
- soit un moteur électrique entraînant une pompe, en particulier une pompe à eau.

## Patentansprüche

1. Verfahren zur präventiven Wartung einer drehenden Maschine, umfassend mindestens einen Rotor (3) und einen Stator (2), die in einem Gehäuse (1) platziert sind, das eine innere Atmosphäre definiert, und auf optionale Weise ein System zum Kühlen (5) dieser Atmosphäre, umfassend die Schritte:
(i) Nachverfolgen der Beschädigung der Isolatoren der drehenden Maschine durch:
(a) die Messung der Konzentration(en) von CO (Kohlenmonoxyd) und auch von NO₂ und/oder O₃ an einer oder an mehreren beliebigen Stellen, die sich in oder in Kontakt mit den Gasen befinden, die die innere Atmosphäre der drehenden Maschine bilden, und
(b) die Visualisierung, die Signalisierung und/oder die Aufzeichnung der Ergebnisse der Messung (7, 8, 9);
(ii) eine Analyse der Messergebnisse, die von der Nachverfolgung stammen, und der Nachweis einer bedeutenden Erhöhung der Konzentration von CO, wenn sich die Konzentrationen von O₃ und oder NO₂ nicht gleichzeitig erhöhen, und
(iii) einen Wartungsvorgang, entschieden auf einer Basis, die mindestens die Analyse, durchgeführt in Schritt (ii), einschließt.

2. Verfahren, nach Anspruch 1, **dadurch gekennzeichnet, dass** die Messungen mit Hilfe eines oder mehrerer Sensoren (6) durchgeführt werden, platziert entweder:
- an einer beliebigen Stelle (6a, 6c) im Luftspalt der drehenden Maschine oder auf ihrem Stator,
- an einer beliebigen Stelle (6b) der inneren Wand des Gehäuses (1) oder auch auf der Ebene einer Klappe des Gehäuses,
- auf der Wand (6d) oder innerhalb (6e) des eventuellen Systems zum Kühlen (5) der drehenden Maschine,
- an einer beliebigen Stelle eines Pumpsystems (4), das einen Teil der inneren Atmosphäre der drehenden Maschine extrahiert.

3. Verfahren, nach Anspruch 1 oder 2, **dadurch gekennzeichnet, dass** der Wartungsvorgang die Schritte umfasst:
(iii-a) einen Stopp der drehenden Maschine,
(iii-b) eine visuelle Inspektion und/oder einen oder mehrere Tests des Zustands der Isolatoren dieser Maschine (z. B. die Messung des Isolationswiderstands oder des Polarisationsindexes), und/oder
(iii-c) eine eventuelle Intervention auf der drehenden Maschine.

4. Verfahren nach einem der Ansprüche 1 bis 3, **dadurch gekennzeichnet, dass** die drehende Maschine ist:
- entweder ein Elektromotor, der einen Kompressor von industriellem Gas, insbesondere Luft, Sauerstoff, Stickstoff, Argon, Wasserstoff, Kohlenstoffmonoxid oder - dioxid, Synthesegas, antreibt,
- oder ein Stromgenerator, der Teil einer Kraft-Wärme-Kopplung von Strom und heißem Fluid, z. B. Dampf, oder eines kombinierten Zyklus ist,
- oder ein Elektromotor, der eine Pumpe, insbesondere eine Wasserpumpe antreibt.

## Claims

1. Method for the preventive maintenance of a rotating machine, comprising at least a rotor (3) and a stator (2) located inside an enclosure (1) defining an inner atmosphere, and optionally a cooling system (5) of said atmosphere, comprising the following steps:
(i) The monitoring of the deterioration of the insulators of said rotating machine by:
(a) Measuring the concentration(s) of CO (carbon monoxide) and also of NO₂ and/or O₃ in one or several sites located in the gases forming the inner atmosphere of said rotating machine or in contact therewith, and
(b) Visualising, displaying and/or recording the results of said measurement (7, 8, 9);
(ii) An analysis of the measurement results stemming from said monitoring, and the detection of a significant increase in CO, if the concentrations of O₃ and/or NO₂ do not increase simultaneously, and
(iii) A maintenance operation decided on a basis that includes at least the analysis conducted in step (ii).

2. Method as defined in claim 1, **characterised in that** said measurements are conducted with one or several sensors (6) located either:
- In any location (6a, 6c) of the air gap of said rotating machine or on its stator,
- Or in any location (6b) of the inner wall of said enclosure (1) or at the level of a hatch of said enclosure,
- Or on the wall of the optional cooling system (5) or within (6e) the optional cooling system (5) of said rotating machine,
- Or in any location of a pumping system (4) extracting part of the inner atmosphere of said rotating machine.

3. Method as defined in claim 1 or 2, **characterised in that** the maintenance operation comprises the following steps:
(iii-a) Stopping said rotating machine,
(iii-b) Visual inspection and/or several tests of the state of the insulators of the machine (for example the measurement of the insulation resistance or of the polarisation index), and/or
(iii-c) As necessary, an intervention on the rotating machine.

4. Method as defined in any one of the claims 1 to 3, **characterised in that** said rotating machine is:
- Either an electric motor driving a compressor of an industrial gas, in particular air, oxygen, nitrogen, argon, hydrogen, carbon monoxide or dioxide, or a synthesis gas,
- Or a power generator forming part of a unit cogenerating electricity and a hot fluid, for example steam, or of a combined cycle,
- Or an electric motor driving a pump, in particular a water pump.
